# EUROPEAN PATENT APPLICATION

(11) **EP 3 845 389 A1**
(43) Date of publication of application: **07.07.2021**
(21) Application number: 19220054.1
(22) Date of filing: 30.12.2019
(51) Int. Cl.: B41J 11/00, B41M 5/00, B41M 7/00, C09D 11/10

(54) **INKJET LASER PRINTING METHOD AND SYSTEM**

(71) Applicant: Shenzhen DFST Technologies Co., Ltd., ShenZhen, Guangdong 518000 (CN)
(72) Inventor: LIU, Xiaoxin, ShenZhen, Guangdong 518000 (CN); HUA, Zhongqiu, ShenZhen, Guangdong 518000 (CN)
(74) Representative: Hirsch & Associés

(57) **Abstract**

The present invention discloses an inkjet laser printing method and system. The method includes: obtaining a printing instruction; moving a printing substrate to a printing area according to the printing instruction; moving an ink cartridge to a preset position; controlling the ink cartridge to jet ink droplets to the printing substrate; and conducting laser beam irradiation on the ink droplets, to cure the ink droplets jetted on the surface of the printing substrate. In the present invention, water-based ink and ink droplets are rapidly cured by means of a laser beam and melt into a plastic surface, and are applied to a plastic substrate for inkjet printing, so as to eliminate a restriction that oil-based ink is required for inkjet printing on plastics previously, and reduce the ambient air pollution caused due to use of the oil-based ink.

## Description

### TECHNICAL FIELD

The present invention relates to the printing field, and in particular, to an inkjet laser printing method and system.

### BACKGROUND

Inkjet printing is generally achieved by making ink attached to the surface of a printing substrate, and therefore there is a specific restriction on the substrate surface. Water-based ink uses water as a solvent, and is suitable for printing on a porous or permeable substrate (such as plain paper, wood, and a corrugated board) or a substrate coated with a permeable coating (such as photographic paper). Oil-based ink is suitable for printing on permeable and non-permeable media (for example, plastics and glass). However, the oil-based ink often uses as an organic solvent as a solvent (for example, a commonly used solvent of the oil-based ink is butanone, acetone, ethanol, methanol, hexanediol, toluene, xylene, or the like).

Due to use of the oil-based ink, content of organic matters in the air is increased. These substances have great impact on human health, and volatilization of the solvent in the oil-based ink solvent also results in air pollution. If the water-based ink is used, it is only used on a substrate with a permeable surface. Therefore, the two types of inks have shortcomings.

In the printing industry, the water-based ink is expected to be used to reduce the harm to the human health and the environment. In addition, if the water-based ink can be used in inkjet printing on plastics, a restriction that the oil-based ink is required for inkjet printing on plastics previously is eliminated, and the ambient air pollution caused due to use of the oil-based ink is reduced.

### SUMMARY

An objective of the present invention is to provide an inkjet laser printing method and system, to reduce the ambient air pollution caused due to use of the oil-based ink.

To achieve the above purpose, the present invention provides the following technical solutions.

An inkjet laser printing method includes:
obtaining a printing instruction;
moving a printing substrate to a printing area according to the printing instruction;
moving an ink cartridge to a preset position;
controlling the ink cartridge to jet ink droplets to the printing substrate; and
conducting laser beam irradiation on the ink droplets, to cure the ink droplets jetted on the surface of the printing substrate.

Optionally, a movement direction of the printing substrate is perpendicular to an arrangement direction of a jet nozzle of the ink cartridge in plane.

Optionally, the ink in the ink cartridge is water-based pigment ink.

Optionally, the printing substrate is a plastic material.

Optionally, the cured ink droplets are resistant to immersion of acid and alkali solutions or multiple types of organic solvents.

An inkjet laser printing system includes:
an instruction obtaining module, configured to obtain a printing instruction;
a printing substrate movement module, configured to move a printing substrate to a printing area according to the printing instruction;
an ink cartridge movement module, configured to move an ink cartridge to a preset position;
a control module, configured to control the ink cartridge to jet ink droplets to the printing substrate; and
a laser module, configured to conduct laser beam irradiation on the ink droplets, to cure the ink droplets jetted on the surface of the printing substrate.

Optionally, a movement direction of the printing substrate is perpendicular to an arrangement direction of a jet nozzle of the ink cartridge in plane.

Optionally, the ink in the ink cartridge is water-based pigment ink.

Optionally, the printing substrate is a plastic material.

Optionally, the cured ink droplets are resistant to immersion of acid and alkali solutions or multiple types of organic solvents.

Compared with the prior art, the present invention has the following technical effects: In the present invention, an ink cartridge is controlled to jet ink droplets to a printing substrate; and laser beam irradiation is conducted on the ink droplets, to cure the ink droplets jetted on the surface of the printing substrate. In the present invention, water-based ink and ink droplets are rapidly cured by means of a laser beam and melt into a plastic surface, and are applied to a plastic substrate for inkjet printing, so as to eliminate a restriction that oil-based ink is required for inkjet printing on plastics previously, and reduce the ambient air pollution caused due to use of the oil-based ink.

### BRIEF DESCRIPTION OF THE DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other accompanying drawings from these accompanying drawings without creative efforts.
FIG. 1 is a flowchart of an inkjet laser printing method according to an embodiment of the present invention; and
FIG. 2 is a structure block diagram of an inkjet laser printing system according to an embodiment of the present invention; and

### DETAILED DESCRIPTION

The following clearly and completely describes the technical solutions in the embodiments of the present invention with reference to accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

An objective of the present invention is to provide an inkjet laser printing method and system, to reduce the ambient air pollution caused due to use of the oil-based ink.

To make the above objects, features, and advantages of the present invention more apparent and easy to understand, the present invention is further described in detail with reference to the accompanying drawings and specific embodiments.

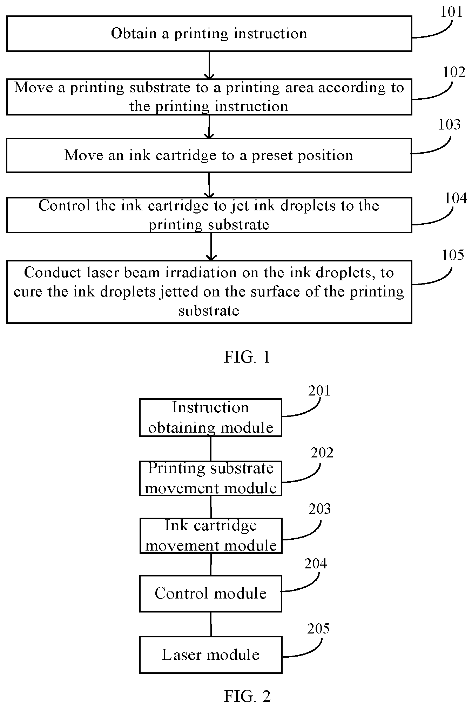

As shown in FIG. 1, an inkjet laser printing method is provided, where the method includes:
Step 101. Obtain a printing instruction.
Step 102. Move a printing substrate to a printing area according to the printing instruction. A movement direction of the printing substrate is perpendicular to an arrangement direction of a jet nozzle of an ink cartridge in plane. The printing substrate is a plastic material, such as PVC, PP, PE, PET, POM, or another plastic material.
Step 103. Move an ink cartridge to a preset position.
Step 104. Control the ink cartridge to jet ink droplets to the printing substrate. The ink in the ink cartridge is water-based pigment ink.
Step 105. Conduct laser beam irradiation on the ink droplets, to cure the ink droplets jetted on the surface of the printing substrate. The cured ink droplets are resistant to immersion of acid and alkali solutions or multiple types of organic solvents, for example, ethanol, acetone, toluene, or xylene.

According to the specific embodiment provided in the present invention, the present invention discloses the following technical effects: In the present invention, the water-based ink and ink droplets are rapidly cured by means of a laser beam and melt into the plastic surface, and are applied to a plastic substrate for inkjet printing, so as to eliminate a restriction that oil-based ink is required for inkjet printing on plastics previously, and reduce the ambient air pollution caused due to use of the oil-based ink.

As shown in FIG. 2, the present invention further provides an inkjet laser printing system, where the system includes:
an instruction obtaining module 201, configured to obtain a printing instruction;
a printing substrate movement module 202, configured to move a printing substrate to a printing area according to the printing instruction, where the printing substrate moves to the printing area along a Y-axis direction, and the printing substrate is a plastic material;
an ink cartridge movement module 203, configured to move an ink cartridge to a preset position;
a control module 204, configured to control the ink cartridge to jet ink droplets to the printing substrate, where The ink in the ink cartridge is water-based pigment ink.
a laser module 205, configured to conduct laser beam irradiation on the ink droplets, to cure the ink droplets jetted on the surface of the printing substrate, where the cured ink droplets are resistant to immersion of acid and alkali solutions or multiple types of organic solvents.

Each embodiment of the present specification is described in a progressive manner, each embodiment focuses on the difference from other embodiments, and the same and similar parts between the embodiments may refer to each other. For a system disclosed in the embodiments, since it corresponds to the method disclosed in the embodiments, the description is relatively simple, and reference can be made to the method description.

Several examples are used for illustration of the principles and implementation methods of the present invention. The description of the embodiments is used to help illustrate the method and its core principles of the present invention. In addition, a person of ordinary skill in the art can make various modifications in terms of specific embodiments and scope of application in accordance with the teachings of the present invention. In conclusion, the content of this specification shall not be construed as a limitation to the invention.

## Claims

1. An inkjet laser printing method, wherein the method comprises:
obtaining a printing instruction;
moving a printing substrate to a printing area according to the printing instruction;
moving an ink cartridge to a preset position;
controlling the ink cartridge to jet ink droplets to the printing substrate; and
conducting laser beam irradiation on the ink droplets, to cure the ink droplets jetted on the surface of the printing substrate.

2. The inkjet laser printing method according to claim 1, wherein a movement direction of the printing substrate is perpendicular to an arrangement direction of a jet nozzle of the ink cartridge in plane.

3. The inkjet laser printing method according to claim 1, wherein the ink in the ink cartridge is water-based pigment ink.

4. The inkjet laser printing method according to claim 1, wherein the printing substrate is a plastic material.

5. The inkjet laser printing method according to claim 1, wherein the cured ink droplets are resistant to immersion of acid and alkali solutions or multiple types of organic solvents.

6. An inkjet laser printing system, wherein the system comprises;
an instruction obtaining module, configured to obtain a printing instruction;
a printing substrate movement module, configured to move a printing substrate to a printing area according to the printing instruction;
an ink cartridge movement module, configured to move an ink cartridge to a preset position;
a control module, configured to control the ink cartridge to jet ink droplets to the printing substrate; and
a laser module, configured to conduct laser beam irradiation on the ink droplets, to cure the ink droplets jetted on the surface of the printing substrate.

7. The inkjet laser printing system according to claim 6, wherein a movement direction of the printing substrate is perpendicular to an arrangement direction of a jet nozzle of the ink cartridge in plane.

8. The inkjet laser printing system according to claim 6, wherein the ink in the ink cartridge is water-based pigment ink.

9. The inkjet laser printing system according to claim 6, wherein the printing substrate is a plastic material.

10. The inkjet laser printing system according to claim 6, wherein the cured ink droplets are resistant to immersion of acid and alkali solutions or multiple types of organic solvents.
